# EUROPÄISCHE PATENTSCHRIFT

(11) **EP 3 525 911 B1**
(45) Veröffentlichungstag und Bekanntmachung des Hinweises auf die Patenterteilung: **15.04.2026**
(21) Anmeldenummer: 17765454.8
(22) Anmeldetag: 14.09.2017
(51) Int. Cl.: B01D 46/00, B01D 46/24

(54) **RUNDFILTERELEMENT, INSBESONDERE ZUR GASFILTRATION**
ROUND FILTER ELEMENT, IN PARTICULAR FOR GAS FILTRATION
ÉLÉMENT FILTRE ROND, EN PARTICULIER POUR LA FILTRATION DE GAZ

(30) Priorität: 17.10.2016 DE 102016012330
(43) Veröffentlichungstag der Anmeldung: 21.08.2019
(73) Patentinhaber: MANN+HUMMEL GmbH, 71636 Ludwigsburg (DE)
(72) Erfinder: FRITZSCHING, Torsten, 71665 Vaihingen (DE); NEEF, Pascal, 78647 Trossingen (DE); HASENFRATZ, Robert, 74523 Schwäbisch-Hall (DE); WITTMERS, Christoph, 74321 Bietigheim-Bissingen (DE)
(74) Vertreter: Mann + Hummel Intellectual Property
(86) Internationale Anmeldenummer: PCT/EP2017/073125
(87) Internationale Veröffentlichungsnummer: WO 2018/072936

(56) Entgegenhaltungen:
- WO-A1-2009/106589
- WO-A1-2012/175438
- WO-A1-2013/104790
- WO-A1-2016/082854
- DE-A1- 102016 003 456
- US-A1- 2010 258 493
- US-B2- 9 320 997

## Beschreibung

### Technisches Gebiet

Die Erfindung bezieht sich auf ein Rundfilterelement, insbesondere zur Gasfiltration, nach dem Oberbegriff des Anspruches 1.

### Stand der Technik

In der WO 2012/110605 A1 wird ein Luftfilterelement beschrieben, das einen längs gestreckten Filtermediumkörper aufweist, welcher radial von der zu reinigenden Luft durchströmt wird. Die Stirnseiten des Filtermediumkörpers sind jeweils von einer Endscheibe strömungsdicht abgedichtet. Der Filtermediumkörper ist als Faltenfilter ausgebildet und weist zur Stabilisierung an seiner Außenseite Verstärkungsrippen aus einem Kunststoffmaterial auf. Das Filterelement wird radial von innen nach außen durchströmt. Ferner ist aus der WO 2013 104791 ein Filterelement sowie ein Filtersystem bekannt, wobei das Filterelement ein rechteckiges Flachfilterelement ist, das an seinen Kurzseiten jeweils zwei in den Eckbereichen angeordnete Ohren hat, die sich parallel zu einer Erstreckung der Langseiten von den Kurzseiten weg erstrecken. Eine Dichtkontur folgt dabei jeweils der Kontur der Ohren. Die Ohren sind ferner so ausgebildet, dass diese sich nicht über eine gedachte Verlängerung der Langseiten über die Ecken hinaus erstrecken.

WO 2009/106589 A1 offenbart einen Rundfilter mit axial verlaufenden Filterfalten für einen Luftfilter einer Brennkraftmaschine. Der Filterbalg kann an einem axialen Ende mit einer bezüglich einer Außenkante des Filterbalges formwahrenden Schale versehen sein. Die formwahrende Schale kann zusätzlich mit einer Dichtungskonfiguration versehen sein, die zum abdichtenden Einbringen des Filterelementes in ein Luftfiltergehäuse dienen kann.

### Offenbarung der Erfindung

Der Erfindung liegt die Aufgabe zugrunde, ein Rundfilterelement mit einem längs gestreckten Filtermediumkörper mit einfachen konstruktiven Maßnahmen in der Weise auszubilden, dass bei kompakten Abmessungen eine hohe Filtrationsleistung gewährleistet ist.

Diese Aufgabe wird erfindungsgemäß mit den Merkmalen des Anspruches 1 gelöst. Die Unteransprüche geben zweckmäßige Weiterbildungen an.

Das erfindungsgemäße Rundfilterelement wird bevorzugt zur Gasfiltration eingesetzt, beispielsweise zur Filtration von Luft, insbesondere im Ansaugtrakt einer Brennkraftmaschine eines Fahrzeugs. Das Filterelement weist einen ringförmig geschlossenen Filtermediumkörper auf, dessen Wandung von dem zu reinigenden Fluid in Radialrichtung durchströmt wird. Der Filtermediumkörper umschließt einen innen liegenden Strömungsraum, der von der Innenwand des Filtermediumkörpers begrenzt wird.

Vorteilhafterweise wird das zu reinigende Fluid axial in den innen liegenden Strömungsraum hineingeleitet, so dass die Innenwand des Filtermediumkörpers die Rohseite bildet. Das Fluid durchströmt die Wandung des Filtermediumkörpers bezogen auf dessen Längsachse radial von innen nach außen; die Außenseite des Filtermediumkörpers bildet entsprechend die Reinseite, über die das gereinigte Fluid aus der Wandung des Filtermediumkörpers austritt. Bei einer alternativen Ausführung ist auch eine Durchströmung des Filtermediumkörpers radial von außen nach innen möglich.

Die axialen Stirnseiten des Filtermediumkörpers sind von Endscheiben strömungsdicht abgedeckt. Eine Endscheibe weist eine mit dem innen liegenden Strömungsraum kommunizierende, zentrale Öffnung für die axiale Strömungsführung des Fluids auf, die gegenüberliegende Endscheibe ist dagegen geschlossen ausgebildet und schließt den innen liegenden Strömungsraum axial nach außen dicht ab.

Zweckmäßigerweise ist die mit der zentralen Öffnung versehene Endscheibe an ihrer radialen Innenseite abgerundet ausgebildet, wodurch das Hineinströmen der Rohluft in den Innenraum im Filtermediumkörper erleichtert wird. Der Radius der Rundung ist an der radialen Innenseite der Endscheibe vorteilhafterweise größer als an der radialen Außenseite. Der Radius an der radialen Innenseite ist gegebenenfalls so groß ausgeführt, dass der Beginn des Radius an der Stirnseite noch innerhalb der Kontur des Filtermediumkörpers liegt.

Das Rundfilterelement und der Filtermediumkörper sind längs gestreckt ausgebildet und weisen eine ovale oder ovalisierte Querschnittsform auf. Bei ovalisierten Querschnittsformen sind auch Querschnittsformen mit parallelen Längsseiten und halbkreisförmigen Schmalseiten möglich. Des Weiteren kommen auch konkave oder konvexe Längsseiten mit radial nach innen gerichteten Wölbungen oder radial nach außen gerichteten Wölbungen in Betracht. Bevorzugt verlaufen die Innenwand und die Außenwand des Filtermediumkörpers konzentrisch zueinander, so dass der Filtermediumkörper eine konstante radiale Dicke aufweist.

Das Rundfilterelement weist ein Dichtungselement auf, insbesondere einen umlaufenden Dichtungsring, das an einem separat von der Endscheibe ausgebildeten Dichtungsträger angeordnet und benachbart zu einer Endscheibe, insbesondere zur rohluftseitigen Endscheibe angeordnet ist, über die das ungereinigte Fluid in den innen liegenden Strömungsraum eingeleitet wird. Das Dichtungselement liegt axial und radial auf Abstand zu der benachbarten, nächstgelegenen Endscheibe. Über das Dichtungselement erfolgt eine strömungsdichte Separierung mit der Roh- von der Reinseite. Aufgrund der separaten Ausführung des Dichtungsträgers von der Endscheibe ist die Endscheibe nicht den Halte- und Dichtkräften unterworfen, die über das Dichtungselement und den Dichtungsträger in Einbausituation des Rundfilterelementes aufgenommen werden. Die Endscheibe bleibt somit unbeeinflusst von den Halte- und Dichtkräften. Aufgrund des Abstandes des Dichtungselementes und des Dichtungsträgers axial und radial zur benachbarten Endscheibe weisen Dichtungsträger und Dichtungselement auch einen Abstand zur Rein- bzw. Außenseite des Filtermediumkörpers auf, so dass das Fluid ungehindert vom Dichtungsträger und vom Dichtungselement über die Reinseite des Filtermediumkörpers austreten kann. Der Dichtungsträger ist fluiddicht ausgebildet und verbindet vorteilhafterweise die nächstgelegene Endscheibe fluiddicht mit dem Dichtungselement.

Erfindungsgemäß ist der Dichtungsträger zur Stirnseite der benachbarten, nächstgelegenen Endscheibe axial beabstandet. Der axiale Abstand beträgt beispielsweise, bezogen auf die gesamte axiale Höhe des Filterelements, maximal 30 % der axialen Höhe, bevorzugt maximal 20 % der axialen Höhe oder maximal 10 % der axialen Höhe.

Der Dichtungsträger weist über den Großteil seines Umfanges einen konstanten radialen Abstand zur Außenwand des Filtermediumkörpers auf. Dementsprechend ragt die Außenseite des Dichtungsträgers radial über die Außenwand des Filtermediumkörpers hinaus. Der Dichtungsträger ist mit mindestens einer radial nach innen gerichteten Einbuchtung versehen, die den konstanten radialen Abstand zwischen Dichtungsträger und Außenwand des Filtermediumkörpers durchbricht, wobei der Dichtungsträger im Bereich der radial nach innen gerichteten Einbuchtung einen reduzierten radialen Abstand zur Außenwand des Filtermediumkörpers aufweist. Der Abstand zwischen dem Dichtungsträger und der Außenwand des Filtermediumkörpers kann gegebenenfalls bis auf 0 reduziert sein, so dass der Dichtungsträger im Bereich der radialen Einbuchtung die Außenwand des Filtermediumkörpers berührt. In Betracht kommt aber auch ein Abstand größer 0, so dass keine Berührung des Dichtungsträgers an der Außenwand des Filtermediumkörpers gegeben ist.

Diese Ausführung hat den Vorteil, dass das Filtergehäuse zur Aufnahme des Filterelementes im Bereich der radial nach innen gerichteten Einbuchtung ebenfalls mit einer reduzierten radialen Erstreckung ausgeführt sein kann. Im Bereich der Einbuchtung kann beispielsweise ein gehäuseseitiger Dom geführt sein, beispielsweise ein Schraubdom zur Aufnahme einer Schraube, über die ein Gehäusedeckel mit einem Filtergrundgehäuse verbindbar ist. Die Einbuchtung im Filterelement erlaubt dementsprechend eine reduzierte radiale Erstreckung eines Filtergehäusebauteils in diesem Abschnitt.

Ein weiterer Vorteil der radial nach innen gerichteten Einbuchtung liegt in der Möglichkeit, eine eindeutige Einbaulage des Filterelementes im Filtergehäuse festzulegen. Insbesondere bei nur einer Einbuchtung bzw. asymmetrisch über den Umfang verteilten Einbuchtungen kann das Filterelement nur in genau einer definierten Einbauposition in das Filtergehäuse eingesetzt werden.

Vorteilhafterweise ist in den Dichtungsträger eine Aufnahmenut eingebracht, die zur Aufnahme des Dichtungselementes dient. Die Aufnahmenut befindet sich vorzugsweise auf der der nächstgelegenen, benachbarten Endscheibe abgewandten Seite des Dichtungsträgers. Auch die Aufnahmenut folgt der Kontur des Dichtungsträgers und weist im Bereich der radial nach innen gerichteten Einbuchtung einen reduzierten radialen Abstand zur Außenwand des Filtermediumkörpers auf. Insbesondere die radial innen liegende, seitliche Begrenzungswand der Aufnahmenut, vorteilhafterweise auch die radial außen liegende Begrenzungswand der Aufnahmenut folgen der Kontur des Dichtungsträgers und besitzen einen gegenüber den sonstigen Abschnitten reduzierten radialen Abstand zur Außenwand des Filtermediumkörpers. Erfindungsgemäß besitzt die Aufnahmenut über ihre gesamte Länge, also auch im Bereich des reduzierten radialen Abstandes zur Außenwand des Filtermediumkörpers, eine konstante Nutbreite.

Gemäß einer weiteren zweckmäßigen Ausführung befindet sich mindestens eine Einbuchtung im Dichtungsträger an einer der Längsseiten des Filtermediumkörpers. Gegebenenfalls kann an beiden Längsseiten des Filtermediumkörpers jeweils eine Einbuchtung vorgesehen sein. Hierbei kommt sowohl eine symmetrische, insbesondere symmetrisch zur Längsachse des Filterelementes angeordnete Positionierung der Einbuchtungen in Betracht als auch eine nicht-symmetrische Anordnung.

Gemäß noch einer weiteren zweckmäßigen Ausführung ist nur die Dichtungswand mit einer begrenzten radialen Einbuchtung versehen, nicht jedoch der Filtermediumkörper. Dementsprechend ist die Außenwand des Filtermediumkörpers im Bereich der radialen Einbuchtung des Dichtungsträgers ohne eine radiale Einschnürung ausgebildet.

Gemäß einer bevorzugten Ausführung ist der Dichtungsträger an einem Stützgitter angeordnet, das an der Reinseite des Filtermediumkörpers (bei Durchströmung von innen nach außen wie bevorzugt) angeordnet ist. Das Stützgitter befindet sich insbesondere an der Außenwand des Filtermediumkörpers. Es kommt eine einteilige Ausführung von Stützgitter und Dichtungsträger in Betracht, die vorzugsweise als Kunststoffbauteile ausgebildet sind. Die Dicht- und Halte- sowie Stützkräfte werden entsprechend über den Dichtungsträger und das Stützgitter aufgenommen, wohingegen der Filtermediumkörper sowie die Endscheiben von diesen Kräften entlastet sind.

Gemäß einer weiteren vorteilhaften Ausführung ist der Dichtungsträger als eine umlaufende Trägerwand ausgebildet, die auf Abstand zur außen liegenden Mantelfläche des Filtermediumkörpers verläuft. Die Trägerwand verläuft insbesondere parallel zu der außen liegenden Mantelfläche des Filtermediumkörpers mit Ausnahme der mindestens einen radial nach innen gerichteten Einbuchtung.

Der Dichtungsträger stützt sich vorteilhafterweise in Einbaulage an einem Gehäusebauteil ab, beispielsweise an einem innen liegenden Absatz in einem Filtergrundgehäuse, das das Filterelement aufnimmt und auf das der Gehäusedeckel aufsetzbar ist. Vorteilhafterweise ist mindestens eine Stirnseite des Stützgitters, gegebenenfalls beide Stirnseiten in die Endscheiben eingebettet. Die Endscheibe besteht bevorzugt aus einem weicheren Material als das Stützgitter und der Dichtungsträger.

Der Filtermediumkörper ist bevorzugt als Faltenfilter mit einer Vielzahl von Filterfalten ausgebildet. Die Filterfalten verlaufen bevorzugt in oder annähernd in Radialrichtung und damit in Durchströmungsrichtung und erstrecken sich zugleich axial zwischen den beiden Stirnseiten des Filtermediumkörpers. Der Faltenfilter ist ringförmig geschlossen ausgebildet.

Es ist insbesondere genau ein als Rundfilter ausgebildeter Filtermediumkörper im Filterelement angeordnet.

Gemäß einer weiteren vorteilhaften Ausführung weist das Rundfilterelement eine sich in Achsrichtung verjüngende Querschnittsform auf, so dass der Außenumfang des Rundfilterelementes im Bereich der ersten Endscheibe unterschiedlich groß ist im Vergleich zum Außenumfang des Rundfilterelementes im Bereich der gegenüberliegenden, zweiten Endscheibe. Im Bereich beider Endscheiben besitzt das Rundfilterelement jeweils eine ovale oder ovalisierte Querschnittsform.

Bei einer sich verjüngenden Querschnittsform des Rundfilterelementes kann die Endscheibe an der Stirnseite mit kleinerem Außenumfang geschlossen ausgebildet sein und den innen liegenden Strömungsraum axial verschließen, wohingegen die gegenüberliegende Endscheibe am größeren Außenumfang eine Strömungsöffnung für das Einleiten von Fluid in den innen liegenden Strömungsraum aufweist.

Es sind auch Ausführungen möglich, bei denen die Endscheibe an der Stirnseite mit größerem Außenumfang geschlossen ausgebildet ist und den innen liegenden Strömungsraum axial verschließt und die gegenüberliegende Endscheibe am kleineren Außenumfang eine Strömungsöffnung für das Einleiten von Fluid in den innen liegenden Strömungsraum aufweist.

An der Stirnfläche, insbesondere an der Oberseite des Dichtungsträgers können gegebenenfalls, vorteilhafterweise mit axialem Abstand zur Stirnfläche, Noppen angeformt sein. Diese Noppen haben die Funktion eines Toleranzausgleiches und können Abweichungen des Dichtungsträgers von einer planen Fläche für das Aufsetzen des Gehäusedeckels und/oder das Aufsetzen auf den Absatz im Filtergrundgehäuse kompensieren. Die Noppen sind beispielsweise stabförmig ausgebildet und liegen parallel zur Seitenwand des Dichtungsträgers; die stabförmigen Noppen verlaufen zum Beispiel in Radialrichtung. In Einbaulage drücken sich die Noppen in das Material des Gehäusebauteils hinein und gleichen hierdurch Toleranzabweichungen aus.

Gemäß einer weiteren zweckmäßigen Ausführung, die sich vorzugsweise auf ein Rundfilterelement mit einer sich in Achsrichtung verjüngenden Querschnittsform bezieht, weist die kleinere Endscheibe radial überstehende Stütznocken auf. Vorteilhafterweise ragen diese Stütznocken in Radialrichtung nicht weiter hinaus als die gegenüberliegende Endscheibe oder die Innen- oder Außenkontur der gegenüberliegenden Dichtung. Es kann jedoch auch ein leichter Überstand vorgesehen sein, um eine besonders starke Verspannung zu erzielen. Die Innenkontur von Dichtungsträger und/oder Dichtungselement verlaufen vorteilhafterweise in Radialrichtung im Wesentlichen entlang des Außenumfangs der größeren Endscheibe.

Die Stütznocken befinden sich vorzugsweise an den Längsseiten und sind insbesondere an der Endscheibe, vorzugsweise an der kleineren Endscheibe angeordnet, insbesondere einteilig mit der Endscheibe ausgebildet und an dieser angeformt. Es ist aber auch möglich, zusätzlich an der Schmalseite einen oder mehrere Nocken an der Endscheibe anzuordnen. Die Nocken ragen in Radialrichtung über die Endscheibe hinaus und stützen das Rundfilterelement im eingebauten Zustand am aufnehmenden Filtergehäuse ab.

Ein weiterer Aspekt der Erfindung bezieht sich auf eine Filtereinrichtung mit einem vorbeschriebenen Rundfilterelement und mit einem Filtergehäuse zur Aufnahme des Rundfilterelements. Zum Filtergehäuse gehört insbesondere auch ein Gehäusedeckel, der auf ein Filtergrundgehäuse aufsetzbar ist, um den Aufnahmeraum im Filtergrundgehäuse, in welchen das Filterelement eingesetzt ist, zu verschließen. Am Filtergrundgehäuse und/oder am Gehäusedeckel können mit den Einbuchtungen korrespondierende radiale Einschnürungen angeordnet sein. Im Bereich der gehäuseseitigen Einschnürungen befinden sich beispielsweise Schraubdome zur Aufnahme von Schrauben, über die der Gehäusedeckel mit dem Filtergrundgehäuse verschraubt wird.

An der Innenseite des Gehäusedeckels ist, gemäß einer weiteren vorteilhaften Ausführung, eine vorzugsweise schwertförmige Strömungsleitrippe angeordnet, welche die Einleitung des Fluidstroms in den innen liegenden Strömungsraum und die gleichmäßige Partikelbelastung des Filterelements bei der Filtration des Fluids unterstützt, insbesondere auch bei nicht-symmetrischen oder nicht-parallelen Strömungsverhältnissen. Das ungereinigte Fluid wird bevorzugt von außen radial in Richtung des Filtermediumkörpers geleitet und trifft dann auf die Strömungsleitrippe an der Innenseite des Gehäusedeckels, die den auftreffenden Fluidstrom beeinflusst, beispielsweise zweiteilt und/oder axial in Richtung des innen liegenden Strömungsraums im Filtermediumkörper leitet.

Es kommen verschiedene Ausführungen der Strömungsleitrippe in Betracht. Die Strömungsleitrippe ist entweder geradlinig und in einer Ebene liegend ausgebildet oder, gemäß einer alternativen Ausführung, gekrümmt ausgeführt. Die Strömungsleitrippe kann sich bei geradliniger Ausführung in Achsrichtung des Filterelementes erstrecken, so dass die Wandseiten der Strömungsleitrippe parallel zur Längsachse des Filterelementes verlaufen.

Die Strömungsleitrippe kann in die Strömungsöffnung hineinragen, die in die Endscheibe des Rundfilterelements eingebracht ist, über die das ungereinigte Fluid in den innen liegenden Strömungsraum im Filtermediumkörper eingeleitet wird.

Gemäß einer weiteren zweckmäßigen Ausführung ist in den Gehäusedeckel eine seitliche, in Radialrichtung weisende Einströmöffnung eingebracht, über die das ungereinigte Fluid radial einströmt. Die Strömungsleitrippe kann benachbart zu dieser Einströmöffnung im Gehäusedeckel angeordnet sein. Die Strömungsleitrippe kann in der Weise positioniert sein, dass die Stirnseite der Strömungsleitrippe der Einströmöffnung im Gehäusedeckel zugewandt ist. Die über den Gehäusedeckel radial herangeführte Fluidströmung trifft auf die Strömungsleitrippe und erfährt eine Ablenkung in Richtung des innen liegenden Strömungsraums im Filtermediumkörper. Die Strömungsleitrippe und die Einströmöffnung können zumindest annähernd parallel ausgerichtet sein.

Vorteilhafterweise ist auch in das Filtergrundgehäuse des Filtergehäuses eine seitliche Einströmöffnung für das heranzuführende Fluid eingebracht, wobei diese Einströmöffnung in dem Filtergrundgehäuse und die seitliche Einströmöffnung im Gehäusedeckel im montierten Zustand übereinander liegen und einen durchgehenden Strömungsweg für das herangeführte Fluid bilden.

Gemäß einer weiteren zweckmäßigen Ausführung ist in das Filtergrundgehäuse eine seitliche, vorzugsweise in Radialrichtung weisende Abströmöffnung eingebracht, über die das gereinigte Fluid abströmt. Es kann zweckmäßig sein, dass die Abströmöffnung zumindest annähernd parallel zur Einströmöffnung sowie zur Strömungsleitrippe ausgerichtet ist.

Gemäß einer weiteren zweckmäßigen Ausführung steht das Filterelement im eingebauten Zustand axial geringfügig über die Stirnseite des Filtergrundgehäuses hinaus, wodurch die Entnahme des Filterelements aus dem Filtergrundgehäuse, beispielsweise zu Wartungszwecken, erleichtert wird. Der Dichtungsträger mit dem Dichtungselement liegt mit kleinem axialen Abstand zur herausragenden Stirnseite des Filterelements und sorgt für die strömungsdichte Separierung zwischen dem außen liegenden Abschnitt des Filterelements und dem innen liegenden, im Filtergrundgehäuse aufgenommenen Abschnitt des Filterelements.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:
- Fig. 1: in Explosionsdarstellung eine Filtereinrichtung zur Gasfiltration, mit einem Filtergrundgehäuse, einem Filterelement und einem Gehäusedeckel;
- Fig. 2: in vergrößerter Einzeldarstellung das Filterelement, das einen umlaufenden Dichtungsträger benachbart zu einer Endscheibe aufweist, wobei in den Dichtungsträger eine radial nach innen gerichtete Einbuchtung eingebracht ist;
- Fig. 3: eine Ansicht von unten auf ein Filterelement mit zwei an gegenüberliegenden Längsseiten angeordneten Einbuchtungen;
- Fig. 4: einen Schnitt längs durch ein Filterelement; und
- Fig. 5: eine Ansicht von oben auf das Filtergrundgehäuse mit eingesetztem Filterelement.

In den Figuren sind gleiche Bauteile mit gleichen Bezugszeichen versehen.

### Ausführungsform(en) der Erfindung

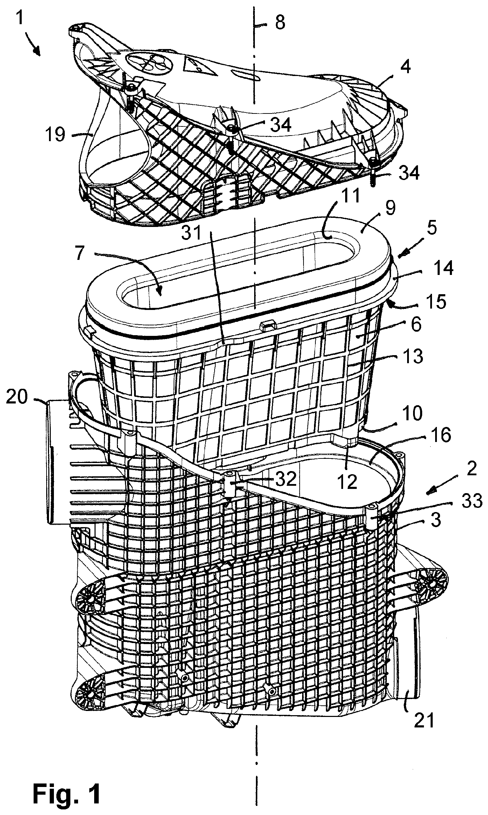

In Fig. 1 ist eine Filtereinrichtung 1 dargestellt, die vorzugsweise zur Gasfiltration, insbesondere zur Luftfiltration im Ansaugtrakt einer Brennkraftmaschine eingesetzt wird. Die Filtereinrichtung 1 umfasst ein Filtergehäuse 2, das sich aus einem Filtergrundgehäuse 3 und einem Gehäusedeckel 4 zusammensetzt, und ein Filterelement 5, das in das Filtergrundgehäuse 3 einsetzbar ist. Der Gehäusedeckel 4 verschließt den Aufnahmeraum im Filtergrundgehäuse zur Aufnahme des Filterelementes 5.

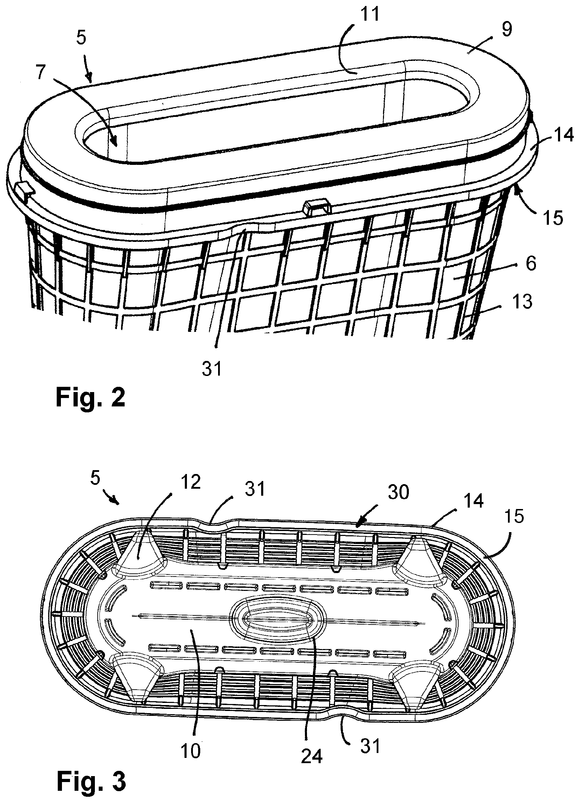

Das Filterelement 5 ist, wie den Fig. 1 und 2 zu entnehmen, mit einem Filtermediumkörper 6 ausgestattet, an dem die Filtration des zu reinigenden Fluids stattfindet. Das Filterelement 5 ist als Rundfilterelement ausgebildet, entsprechend ist auch der Filtermediumkörper 6 als Rundelement ausgebildet, das einen innen liegenden Strömungsraum 7 einschließt, in den das zu reinigende Fluid eingeleitet wird. Das Fluid wird axial, bezogen auf die Längsachse 8 des Filterelementes 5 und der Filtereinrichtung 1 (Fig. 1), in den Strömungsraum 7 eingeführt. Anschließend durchströmt das Fluid die Wandung des Filtermediumkörpers 6 radial von innen nach außen. Dementsprechend bildet die Innenwand des Filtermediumkörpers 6 die Rohseite und die Außenwand die Reinseite.

Das Filterelement 5 und der Filtermediumkörper 6 besitzen eine stark ovalisierte, längs gestreckte Form mit zwei parallel verlaufenden Längsseiten und halbkreisförmigen Schmalseiten. Außerdem besitzt das Filterelement 5 bezogen auf seine Höhe eine konusförmige Grundform, bei der die axial gegenüberliegenden Stirnseiten des Filterelementes 5 unterschiedlich groß ausgebildet sind und einen unterschiedlich großen Außenumfang aufweisen. Die axialen Stirnseiten des Filtermediumkörpers 6 sind von jeweils einer Endscheibe 9, 10 strömungsdicht abgedeckt, wobei die Endscheibe 9 an der größeren Stirnseite des Filterelementes 5 offen ausgebildet ist und eine Strömungsöffnung 11 aufweist, über die das Rohfluid in den innen liegenden Strömungsraum 7 einströmen kann. Die gegenüberliegende Endscheibe 10 ist dagegen, wie Fig. 3 zu entnehmen, geschlossen ausgebildet, so dass auch der innen liegende Strömungsraum 7 an dieser Seite axial verschlossen ist.

An der geschlossen ausgebildeten Endscheibe 10 sind Nocken 12 angeformt, die sich radial nach außen erstrecken und an den Längsseiten benachbart zu den Schmalseiten positioniert sind. Die Nocken 12, die einteilig mit der Endscheibe 10 ausgebildet sind, stützen das Filterelement 5 im montierten Zustand am Filtergrundgehäuse 3 ab. In Radialrichtung ragen die Nocken 12 nicht weiter vor als die gegenüberliegende, größere Endscheibe 9.

An der Außenwand des Filtermediumkörpers 6 befindet sich ein Stützgitter 13, das insbesondere aus Kunststoff gefertigt und separat von den Endscheiben 9 und 10 ausgebildet ist. Das Stützgitter 13 stützt den Filtermediumkörper an dessen Außenwand in Radialrichtung ab. Aufgrund der radialen Durchströmung des Filtermediumkörpers 6 von innen nach außen entsteht ein nach außen gerichteter Druck im Filtermediumkörper, der von dem Stützgitter 13 aufgenommen wird. Dies stellt sicher, dass sich der Filtermediumkörper 6 durch den Druck des ihn durchströmenden Fluids nicht verformt.

Benachbart zu der Endscheibe 9, in die die Strömungsöffnung 11 für das Einführen des Rohfluids eingebracht ist, befindet sich ein Dichtungsträger 14, der Träger eines Dichtungselementes 15 ist. Der Dichtungsträger 14 ist als eine umlaufende Trägerwand ausgebildet, die in einer Ebene orthogonal zur Längsachse 8 liegt und vorzugsweise einteilig mit dem Stützgitter 13 ausgeführt ist. Der Dichtungsträger 14 ist mit einem geringen axialen Abstand zur oben liegenden Endscheibe 9 und mit einem erheblich größeren axialen Abstand zur untenliegenden Endscheibe 10 angeordnet. Der Außenumfang des Dichtungsträgers 14 besitzt eine größere radiale Erstreckung als die Außenwand des Filtermediumkörpers 6.

Das Dichtungselement 15 ist als ein Dichtring ausgebildet, der bevorzugt in eine Aufnahmenut in der Stirnseite der Trägerwand 14 auf der der benachbarten Endscheibe 9 abgewandten Seite eingesetzt ist. Das Dichtungselement 15 ist der nächstgelegenen Endscheibe 9 abgewandt und der gegenüberliegenden Endscheibe 10 zugewandt und liegt im montierten Zustand an einem umlaufenden Absatz 16 (Fig. 1) an der Innenwand des aufnehmenden Filtergrundgehäuses 3 auf. Der Absatz 16 liegt axial auf Abstand zur oberen Stirnkante des Filtergrundgehäuses 3.

Wie Fig. 3 zu entnehmen, befindet sich auf der der Endscheibe 9 abgewandten Unterseite des Dichtungsträgers 14 eine umlaufende Aufnahmenut 30, die zur Aufnahme des Dichtungselements dient. Im zusammengebauten Zustand liegt das Dichtungselement in der Aufnahmenut 30 auf dem Absatz 16 an der Innenwand des aufnehmenden Filtergrundgehäuses 3 auf und separiert die Roh- von der Reinseite. Die Aufnahmenut 30 weist über ihre Länge eine konstante Nutbreite auf.

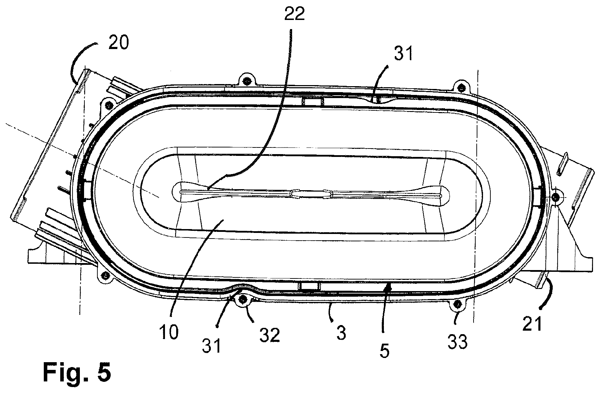

Wie in den Fig. 1 bis 5 dargestellt, ist in den Dichtungsträger 14 eine radial nach innen gerichtete Einbuchtung 31 eingebracht, die gegenüber den weiteren Abschnitten des Dichtungsträgers 14 eine reduzierte radiale Erstreckung aufweist. Gemäß Fig. 3 und 5 sind an beiden gegenüberliegenden Längsseiten des Filterelementes 5 derartige radiale Einbuchtungen 31 angeordnet. Die beiden radialen Einbuchtungen 31 sind spiegelsymmetrisch zur Längsachse 8 des Filterelementes positioniert.

Die Einbuchtungen 31 sind in der Weise ausgeführt, dass der radiale Abstand zur Außenwand des Filtermediumkörpers 6 reduziert ist, wobei der Abstand gegebenenfalls bis auf null reduziert sein kann, so dass der Dichtungsträger 14 die Außenwand des Filtermediumkörpers 6 berührt. Der Filtermediumkörper 6 weist keine derartige radiale Einbuchtung oder Einschnürung auf, sondern ist im Bereich der Einbuchtungen 31 des Dichtungsträgers 14 glattwandig und ohne radiale Verjüngung ausgebildet. Die Einbuchtung 31 entsteht dadurch, dass ein radial über die Außenwand des Filtermediumkörpers 6 überstehender Teil des Dichtungsträgers 14, der die Aufnahmenut 30 für das Dichtungselement aufnimmt, in seinem radialen Überstand reduziert ist. Die innere und die äußere Begrenzungswand zur Begrenzung der Aufnahmenut 30 sind im Bereich der radialen Einbuchtung konzentrisch verlaufend ausgebildet, so dass die Nutbreite auch im Bereich der radialen Einbuchtung 31 konstant bleibt.

Die radiale Einbuchtung 31 erlaubt es, wie Fig. 1 in Verbindung mit Fig. 5 zu entnehmen ist, dass ein Schraubdom 32 am Filtergrundgehäuse 3 im Bereich der Einbuchtung 31 einen geringeren radialen Abstand aufweist als sonstige Schraubdome 33, wobei die Schraubdome 32, 33 zur Aufnahme von Schrauben 34 (Fig. 1) am Gehäusedeckel 4 dienen. Die Schrauben 34 sind ebenfalls in Domen angeordnet, die an dem Gehäusedeckel 4 angeformt sind; der Dom mit der Schraube 34, welche dem Schraubdom 32 am Filtergrundgehäuse 3 zugeordnet ist, kann ebenso wie der Schraubdom 32 mit geringerem radialen Abstand angeordnet sein.

In den Gehäusedeckel 4 ist eine seitliche Einströmöffnung 19 (Fig. 1, 5) eingebracht, über die das Rohfluid radial in die Filtereinrichtung hineinströmen kann. Die Einströmöffnung 19 im Gehäusedeckel 4 korrespondiert mit einer weiteren Einströmöffnung 20, die in das Filtergrundgehäuse 3 eingebracht ist. Bei aufgesetztem Gehäusedeckel 4 liegen die Einströmöffnungen 19 und 20 übereinander, so dass ein durchgehender Strömungsweg für das Rohfluid gebildet ist.

Am Filtergrundgehäuse 3 befindet sich eine seitliche, radiale Abströmöffnung 21 für die Ableitung des gereinigten Fluids. Die Strömungslängsachsen der Einströmöffnungen 19 und 20 einerseits und der Abströmöffnung 21 andererseits verlaufen zumindest annähernd parallel.

Wie Fig. 3 zu entnehmen, ist an der unteren Endscheibe 10 auf der dem innen liegenden Strömungsraum 7 axial abgewandten Seite ein ringförmiges Abstützteil 24 mittig angeformt, mit dem das Filterelement 5 auf einen gehäuseseitigen Stützdom aufsetzbar ist. Der Stützdom befindet sich am Boden des Filtergrundgehäuses 3. Das ringförmige Abstützteil 24 weist eine längs gestreckte Querschnittsform auf.

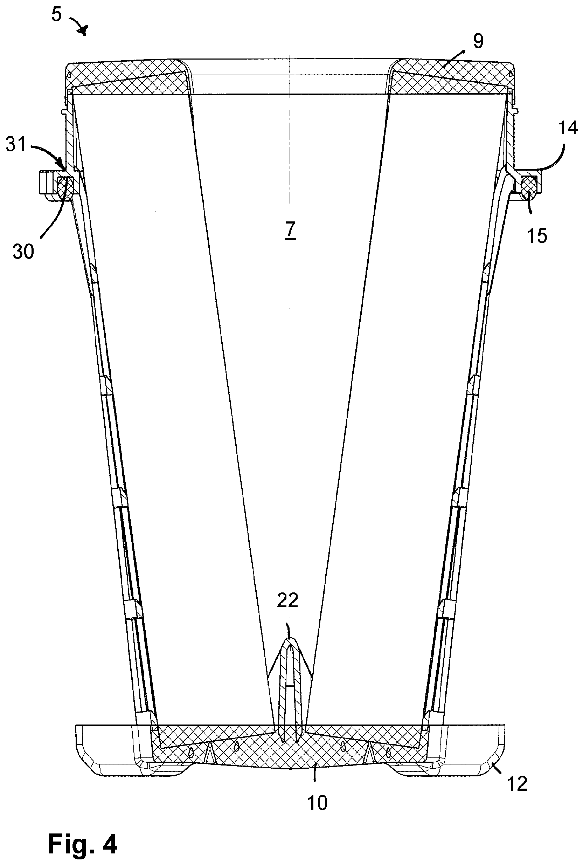

Wie Fig. 4 und 5 zu entnehmen, befindet sich im Bodenbereich des Filterelementes 5, benachbart zur unteren Endscheibe 10, ein Formkörper 22, der insbesondere einteilig mit dem Stützgitter 13 ausgebildet ist. Der Formkörper 22 ragt axial in den innen liegenden Strömungsraum 7 im Filtermediumkörper 6 hinein und sorgt für eine Stabilisierung des als Faltenfilters ausgeführten Filtermediumkörpers 6. Der Formkörper 22 verjüngt sich zu seiner offenen Stirnseite hin keilförmig und weist im mittleren Bereich einen abgesenkten Dom auf, der in die untere Endscheibe 10 hineinragt. Auch die radial außen liegenden Abschnitte des Formkörpers 22 ragen in die Endscheibe 10 hinein, wodurch eine feste Verbindung zwischen dem Formkörper 22 und der unteren Endscheibe 10 erreicht wird. Der Formkörper 22 ist zumindest im Wesentlichen geradlinig ausgebildet und erstreckt sich in Längsrichtung des Filtermediumkörpers 6. Die radial außen liegenden Abschnitte des Formkörpers 22 sind mit dem Stützgitter 13 verbunden, so dass Stütz- und Haltekräfte von dem Formkörper 22 aufgenommen werden und die untere Endscheibe 10 entlastet wird.

## Patentansprüche

1. Rundfilterelement, insbesondere zur Gasfiltration, beispielsweise für einen Luftfilter, mit einem Filtermediumkörper (6), dessen Wandung von dem zu reinigenden Fluid bezogen auf die Längsachse (8) des Filtermediumkörpers (6) in Radialrichtung durchströmbar ist, wobei der Filtermediumkörper (6) eine längs gestreckte Querschnittsform aufweist, **dadurch gekennzeichnet, dass** benachbart zur radial außen liegenden Außenwand des Filtermediumkörpers (6) und benachbart zu einer Stirnseite des Filtermediumkörpers (6) ein Dichtungsträger (14) angeordnet ist, der Träger eines Dichtungselements (15) ist und über den Großteil seines Umfangs einen konstanten radialen Abstand zur Außenwand des Filtermediumkörpers (6) aufweist, jedoch mindestens eine radial nach innen gerichtete Einbuchtung (31) mit einem reduzierten radialen Abstand zur Außenwand des Filtermediumkörpers (6) aufweist, wobei sich die mindestens eine Einbuchtung (31) im Dichtungsträger (14) an einer Längsseite des Filtermediumkörpers (6) befindet, wobei der Dichtungsträger (14) zur Stirnseite einer benachbarten, nächstgelegenen Endscheibe axial beabstandet ist, wobei in den Dichtungsträger (14) eine Aufnahmenut (30) zur Aufnahme des Dichtungselements (15) eingebracht ist und die Aufnahmenut (30) im Bereich der radial nach innen gerichteten Einbuchtung (31) einen reduzierten radialen Abstand zur Außenwand des Filtermediumkörpers (6) aufweist, wobei die Aufnahmenut (30) über ihre gesamte Länge einschließlich des Bereichs des reduzierten radialen Abstandes zur Außenwand des Filtermediumkörpers (6) eine konstante Nutbreite besitzt.

2. Rundfilterelement nach Anspruch 1, **dadurch gekennzeichnet, dass** sich an beiden Längsseiten des Filtermediumkörpers (6) jeweils eine Einbuchtung (31) im Dichtungsträger (14) befindet.

3. Rundfilterelement nach Anspruch 1 oder 2, **dadurch gekennzeichnet, dass** die Außenwand des Filtermediumkörpers (6) im Bereich der Einbuchtung (31) des Dichtungsträgers (14) ohne radiale Einschnürung ausgebildet ist.

4. Rundfilterelement nach einem der Ansprüche 1 bis 3, **dadurch gekennzeichnet, dass** sich die Querschnittsfläche des Filtermediumkörpers (6) von einer Stirnseite zur gegenüberliegenden Stirnseite hin verjüngt.

5. Rundfilterelement nach einem der Ansprüche 1 bis 4, **dadurch gekennzeichnet, dass** an einer Seitenwand des Filtermediumkörpers (6) ein Stützgerüst angeordnet ist, insbesondere an der Außenwand des Filtermediumkörpers (6).

6. Rundfilterelement nach einem der Ansprüche 1 bis 5, **dadurch gekennzeichnet, dass** der Filtermediumkörper(6) als Faltenfilter ausgebildet ist, dessen Filterfalten sich zumindest annähernd in Durchströmungsrichtung erstrecken.

7. Filtereinrichtung mit einem Rundfilterelement nach einem der Ansprüche 1 bis 6 und mit einem Filtergehäuse (2) zur Aufnahme des Rundfilterelements.

8. Filtereinrichtung nach Anspruch 7, **dadurch gekennzeichnet, dass** ein Verbindungselement zwischen einem Filtergrundgehäuse (3) und einem aufsetzbaren Gehäusedeckel (4) des Filtergehäuses (2) durch die radial nach innen gerichtete Einbuchtung (31) im Filtermediumkörper (6) geführt ist.

## Claims

1. A round filter element, in particular for gas filtration, for example for an air filter, with a filter medium body (6), the wall of which is through-flowable by the fluid to be cleaned in the radial direction relative to the longitudinal axis (8) of the filter medium body (6), wherein the filter medium body (6) features an elongated cross-sectional shape, **characterized in that** adjacent to the radially outer wall of the filter medium body (6) and adjacent to a front face of the filter medium body (6) a seal carrier (14) is disposed, which is a carrier for a sealing element (15) and features a constant radial distance from the outer wall of the filter medium body (6) over most of its circumference, but features at least one radially inwardly directed indentation (31) with a reduced radial distance from the outer wall of the filter medium body (6), wherein the at least one indentation (31) in the seal carrier (14) is located on a longitudinal side of the filter medium body (6), wherein the seal carrier (14) is axially spaced from the front face of an adjacent, nearest end disc, wherein a receiving groove (30) for receiving the sealing element (15) is formed in the seal carrier (14) and the receiving groove (30) features a reduced radial distance to the outer wall of the filter medium body (6) in the area of the radially inwardly directed indentation (31), wherein the receiving groove (30) features a constant groove width over its entire length, including the area of the reduced radial distance to the outer wall of the filter medium body (6).

2. The round filter element according to claim 1, **characterized in that** there is an indentation (31) in the seal carrier (14) on each of the two longitudinal sides of the filter medium body (6).

3. The round filter element according to claim 1 or 2, **characterized in that** the outer wall of the filter medium body (6) is designed without radial constriction in the area of the indentation (31) of the seal carrier (14).

4. The round filter element according to one of the claims 1 to 3, **characterized in that** the cross-sectional area of the filter medium body (6) tapers from one front face to the opposite front face.

5. The round filter element according to one of the claims 1 to 4, **characterized in that** a support frame is disposed on a side wall of the filter medium body (6), in particular on the outer wall of the filter medium body (6).

6. The round filter element according to one of the claims 1 to 5, **characterized in that** the filter medium body (6) is designed as a folded filter whose filter folds extend at least approximately in the through-flow direction.

7. A filter device with a round filter element according to one of the claims 1 to 6 and with a filter housing (2) for receiving the round filter element.

8. The filter device according to claim 7, **characterized in that** a connecting element between a filter base housing (3) and an attachable housing cover (4) of the filter housing (2) is guided through the radially inwardly directed indentation (31) in the filter medium body (6).

## Revendications

1. Élément filtrant rond, en particulier pour la filtration de gaz, par exemple pour un filtre à air, comprenant un corps de milieu filtrant (6) dont la paroi peut être traversée par le fluide à purifier dans le sens radial par rapport à l'axe longitudinal (8) du corps de milieu filtrant (6), le corps de milieu filtrant (6) présentant une forme de section transversale allongée, **caractérisé en ce qu'un** porte-joint (14) est disposé à proximité de la paroi extérieure située radialement à l'extérieur du corps de milieu filtrant (6) et à proximité d'une face frontale du corps de milieu filtrant (6), le porte-joint portant un élément d'étanchéité (15) et présentant sur la majeure partie de sa circonférence une distance radiale constante par rapport à la paroi extérieure du corps de milieu filtrant (6), mais présente au moins une entaille (31) orientée radialement vers l'intérieur avec une distance radiale réduite par rapport à la paroi extérieure du corps de milieu filtrant (6), l'entaille (31), au moins au nombre d'une, étant située dans le porte-joint (14) sur un côté longitudinal du corps de milieu filtrant (6), le porte-joint (14) étant espacé axialement de la face frontale d'un disque d'extrémité adjacent le plus proche, une rainure de réception (30) destinée à recevoir l'élément d'étanchéité (15) étant introduite dans le porte-joint (14) et la rainure de réception (30) présentant, dans la zone de l'entaille (31) dirigée radialement vers l'intérieur, une distance radiale réduite par rapport à la paroi extérieure du corps de milieu filtrant (6), la rainure de réception (30) ayant une largeur constante sur toute sa longueur, y compris dans la zone de distance radiale réduite par rapport à la paroi extérieure du corps de milieu filtrant (6).

2. Élément filtrant rond selon la revendication 1, **caractérisé en ce qu'il** y a une entaille (31) dans le porte-joint (14) sur chacun des deux côtés longitudinaux du corps de milieu filtrant (6).

3. Élément filtrant rond selon la revendication 1 ou 2, **caractérisé en ce que** la paroi extérieure du corps de milieu filtrant (6) est conçue sans rétrécissement radial dans la zone de l'encoche (31) du porte-joint (14).

4. Élément filtrant rond selon l'une quelconque des revendications 1 à 3, **caractérisé en ce que** la surface de section transversale du corps de milieu filtrant (6) se rétrécit d'une face frontale vers la face frontale opposée.

5. Élément filtrant rond selon l'une quelconque des revendications 1 à 4, **caractérisé en ce qu'**une structure d'appui est disposée sur une paroi latérale du corps de milieu filtrant (6), en particulier sur la paroi extérieure du corps de milieu filtrant (6).

6. Élément filtrant rond selon l'une quelconque des revendications 1 à 5, **caractérisé en ce que** le corps de milieu filtrant (6) est conçu comme un filtre à plis dont les plis de filtre s'étendent au moins approximativement dans la direction d'écoulement.

7. Dispositif de filtration avec un élément filtrant rond selon l'une quelconque des revendications 1 à 6 et avec un boîtier de filtre (2) servant à réceptionner l'élément filtrant rond.

8. Dispositif de filtration selon la revendication 7, **caractérisé en ce qu'**un élément de raccordement entre un boîtier de base de filtre (3) et un couvercle de boîtier (4) pouvant être placé sur le boîtier de filtre (2) est guidé à travers l'entaille (31) orientée radialement vers l'intérieur dans le corps de milieu filtrant (6).
